# EUROPÄISCHE PATENTSCHRIFT

(11) **EP 1 056 931 B1**
(45) Veröffentlichungstag und Bekanntmachung des Hinweises auf die Patenterteilung: **09.10.2002**
(21) Anmeldenummer: 99914414.0
(22) Anmeldetag: 11.02.1999
(51) Int. Cl.: F01D 11/00, F16J 15/32

(54) **DICHTUNGSANORDNUNG SOWIE VERWENDUNG EINER DICHTUNGSANORDNUNG**
SEALING DEVICE AND USE OF A SEALING DEVICE
DISPOSITIF D'ETANCHEITE, ET UTILISATION D'UN DISPOSITIF D'ETANCHEITE

(30) Priorität: 19.02.1998 DE 19807029
(43) Veröffentlichungstag der Anmeldung: 06.12.2000
(73) Patentinhaber: SIEMENS AKTIENGESELLSCHAFT, 80333 München (DE)
(72) Erfinder: SIMON, Volker, D-45470 Mülheim an der Ruhr (DE)
(86) Internationale Anmeldenummer: DE9900389
(87) Internationale Veröffentlichungsnummer: WO99042704

(56) Entgegenhaltungen:
- EP-A- 0 169 394
- AT-B- 33 252
- DE-A- 19 519 322

## Beschreibung

Die Erfindung betrifft eine Dichtungsanordnung zur Abdichtung eines axialen Spaltes einer thermischen Strömungsmaschine, der zwischen einer um die Rotationsachse rotierbaren Komponente und einer gegenüber der Rotationsachse feststehenden Komponente gebildet ist. Die Erfindung betrifft weiterhin eine Verwendung einer Dichtungsanordnung zur Abdichtung eines axialen Spaltes zwischen einer Laufschaufel und einer Leitschaufel einer Dampfturbine.

In der EP 0 611 905 A1 ist eine Vorrichtung zum berührungsfreien Abdichten eines radialen Spaltes zwischen Räumen unterschiedlichen Drucks, insbesondere für eine Strömungsmaschine beschrieben. Hierbei müssen Wellendurchtritte zwischen Räumen unterschiedlichen Drucks mit geeigneten Dichtungen versehen werden. Die angegebene Vorrichtung besteht aus einer Labyrinthdichtung, bei der stufenförmige Labyrinthspalte zwischen einem rotierenden und einem feststehenden Teil gebildet sind. In den Labyrinthspalten sind jeweils an dem rotierenden und an dem feststehenden Teil Dichtungsspitzen angeordnet, wodurch ein hoher Grad der Verwirbelung eines durchströmenden Mediums erreicht werden soll. Die Dichtungsspitzen zwischen feststehendem und rotierendem Teil sind möglichst nahe aneinander angeordnet, so daß eine Abdichtung in radialer Richtung eines sich in axialer Richtung erstreckenden Spaltes ergibt. Die Dichtungsspitzen sind radial so gerichtet, daß sich die Dichtungsspitzen zweier benachbarter Stufen überlappen. Eine Gruppe von Dichtungsspitzen kann mit Hilfe eines Stemmdrahtes in eine entsprechende Nut eingestemmt sein.

In dem Artikel "Maßnahmen zur Modernisierung und Lebensdauerverlängerung an Dampfturbinenkomponenten" von D. Bergmann, M. Jansen und H. Oeynhausen in VGB Kraftwerkstechnik 71, 1991, Heft 2, S. 116 - 122, sind verschiedene Dichtungen für eine Turbinenschaufel einer Dampfturbine angegeben. Die Dichtungen dienen hierbei der Abdichtung eines radialen Spaltes, d.h. eines Spaltes, der sich in Richtung der Turbinenwelle erstreckt und durch den radialen Abstand zwischen der Turbinenwelle und einer Leitschaufel oder dem radialen Abstand zwischen einer Laufschaufel und einer Gehäuseinnenwand einen Durchlaß für Leckdampf bildet. Es sind Dichtungen angegeben, bei denen Vertiefungen in einer Leitschaufel eingebracht sind. Die geringsten relativen Leckdampfstromraten werden für sogenannte Spitze-Spitze-Dichtungen erzielt, bei denen in axialer Richtung alternierend Dichtspitzen an der Turbinenwelle und der Leitschaufel angeordnet sind.

In der DE 38 36 474 C2 ist eine Bürstendichtung, bestehend aus zwei Stirnplatten und einem dazwischen angeordneten Paket dicht gepackter Borsten beschrieben. Die Borsten ragen mit ihren freien Enden über die Stirnplatten hinaus. Die Bürsten sind in einer Mehrzahl von Segmenten zusammenfaßt, welche Segmente in der Hauptebene der Dichtung jeweils durch einen Spalt voneinander getrennt aufeinander folgend angeordnet sind. Die Bürstendichtung dient hierbei der Abdichtung eines radialen Spaltes zwischen zwei relativ zueinander umlaufenden Bauteilen.

In der DE 34 25 162 C2 ist eine Radialspaltdichtung beschrieben, die eine nach Art einer aus parallelgerichteten Borsten gebildete Bürstendichtung aufweist, wobei die Borsten geneigt sind zur Achse eines drehenden Maschinenteils. Weitere Radialspaltdichtungen mit Borsten, die eine Bürstendichtung bilden, sind in der österreichischen Patentschrift 33 252 vom 10. Juni 1908, der US-Patentschrift 5,316,318 sowie der WO 92/05378 A1 angegeben.

In der DE-OS 19 519 322 A1 ist eine Dichtung zwischen Laufrad und Gehäusewand einer Kreiselpumpe angegeben. Hierbei wird die bei Flüssigkeitspumpen auftretende Problematik behandelt, daß bei verschmutzter zu fördernder Flüssigkeit einer durch die abrasive Wirkung der Schutzteile verursachten Spalterweiterung Rechnung getragen werden muß. Hierbei ist einer der beiden Dichtungspartner als Bürste ausgebildet, die auf einer glatten Gegenfläche des anderen Dichtungspartners aufliegt. Die durch die beiden Dichtpartner gebildete Dichtstrecke kann dabei axial oder radial verlaufen.

Aus der EP-A1-0 196 394 geht eine Dichtung zwischen zwei relativ zueinander rotierbaren Maschinenteilen hervor, wobei Räume unterschiedlichen Drucks voneinander zu trennen sind. Die Dichtung ist ausgeführt als Bürstendichtung unter einem Winkel zu einer Hauptachse wenigstens eines Maschinenteils. Dadurch können gute Lauf- und Dichteigenschaften einerseits sowie vor allem Anwendungen der Bürstendichtung auch bei Konstruktionen mit räumlich sehr beengten Verhältnissen realisiert werden, wie sie bei Fluggastriebwerken mit zum Teil mehreren konzentrisch angeordneten Wellen vorliegen.

Aufgabe der Erfindung ist es, eine alternative Dichtungsanordnung zur Verminderung von Spaltverlusten, die in einem Spalt zwischen einer rotierbaren Komponente und einer feststehenden Komponente auftreten können, anzugeben. Eine weitere Aufgabe der Erfindung besteht in der Angabe einer Verwendung einer Dichtungsanordnung.

Erfindungsgemäß wird die erstgenannte Aufgabe durch eine Dichtungsanordnung zur Abdichtung eines axialen Spaltes in einer thermischen Strömungsmaschine, gelöst, wobei der Spalt zwischen einer um die Rotationsachse rotierbaren, eine Laufschaufel ausweisende Komponente und einer gegenüber der Rotationsachse feststehenden, eine Leitschaufel aufweisende Komponente gebildet ist, wobei die rotierbare Komponente mit einer Welle der thermischen Strömungsmaschine verbunden ist, und wobei mit einem bürstenartigen, Borsten aufweisenden Dichtelement, welches in den Spalt hineinragt, eine Abdichtung erzielt wird. Eine thermische Strömungsmaschine kann hierbei eine Dampfturbine, eine Gasturbine, ein Verdichter oder ähnliches sein mit einem Fluid, das ein Gas oder Dampf ist.

Ein axialer Spalt ist hierbei ein Spalt, dessen Hauptausdehnungsrichtung senkrecht zur Rotationsachse gerichtet ist. Der Spalt kann hierbei zwischen ± 45° um die Senkrechte zur Rotationsachse, insbesondere ± 15°, geneigt sein. Durch einen axialen Spalt erfolgt ein Transport eines Fluids zur Rotationsachse hin oder von dieser weg. Bei einem radialen Spalt hingegen erfolgt ein Transport eiens Fluides in Richtung der Rotationsachse. Der axiale Spalt erstreckt sich somit entlang einer Ausdehnungsrichtung, die gegenüber der Rotationsachse geneigt ist.

Die Erfindung geht hierbei von der Erkenntnis aus, daß es zur Verringerung von Spaltverlusten möglich ist, eine Abdichtung eines axialen Spaltes zu erzielen, der sich zumindest bereichsweise in Richtung der Rotationsachse erstreckt und eine Durchströmung eines Fluids in einer gegenüber der Rotationsachse geneigten Richtung ermöglicht. Hierdurch ist auch zusätzlich oder alleinig eine Verringerung von Spaltverlusten durch einen radialen Spalt gegeben, der mit dem axialen Spalt unmittelbar strömungstechnisch verbunden ist. Mit einer Anordnung eines bürstenartigen, Borsten aufweisenden Dichtelementes ist zudem eine besonders effektive Abdichtung eines axialen Spaltes zwischen einer feststehenden Komponente und einer rotierenden Komponente gegeben, wobei durch Verwendung von Borsten das Dichtelement sich fast vollständig über den Spalt von der einen Komponente zur anderen Komponente erstrecken kann. Die Borsten erlauben auch eine axiale Spaltänderung (Veränderung, insbesondere Verkleinerung, der Spaltbreite) von bis zu 2 cm, ohne beschädigt zu werden, bei gleichbleibender Dichtwirkung.

Es ist ebenfalls möglich, insbesondere bei Verwendung von biegeweichen und elastisch deformierbaren Borsten, daß die Borsten schleifend während einer Rotation der rotierbaren Komponente an dieser oder alternativ an der feststehenden Komponente anliegen können.

Die Borsten des Dichtelementes sind vorzugsweise dicht gepackt, so daß sie den durch den Spalt gebildeten Querschnitt fast vollständig verschließen. Das Dichtelement sowie die Borsten sind vorzugsweise um einen Axialwinkel gegenüber der Rotationsachse geneigt. Dieser Axialwinkel, welcher sowohl in mathematisch positiver als auch negativer Richtung gegenüber der Rotationsachse vorliegen kann, liegt vorzugsweise betragsmäßig unter 40°. Insbesondere liegt er im Bereich von etwa ±20°, vorzugsweise im Bereich zwischen ±8°. Das Dicht-element kann auch im wesentlichen parallel zur Rotationsachse gerichtet sein. Die Dichtungsanordnung weist vorzugsweise zwei oder mehr Dichtelemente auf, welche zusammen einen Dichtring bilden. Dieser Dichtring versperrt fast vollständig den Querschnitt des Spaltes, so daß hierdurch die Ausbildung einer Leckströmung eines Fluids, wie Dampf (Wasserdampf) oder Heißgas, weitgehend verhindert ist. Ein durch die Verwendung mehrerer Dichtelemente teilbarer Dichtring eignet sich für eine besonders einfache Demontage und für einen einfachen Austausch.

Die Ausdehnungsrichtung des Spaltes ist vorzugsweise um etwa 90° gegenüber der Rotationsachse geneigt, so daß ein klassischer Axialspalt im Gegensatz zu einem Radialspalt gebildet ist.

Die Dichtungsanordnung ist vorzugsweise in einer thermischen Strömungsmaschine insbesondere einer Dampfturbine, einer Gasturbine oder einem Turbogenerator eingesetzt. Die rotierbare Komponente ist hierbei vorzugsweise mit einer Welle der Turbomaschine verbunden. Insbesondere eignet sich die Dichtungsanordnung zur Abdichtung eines axialen Spaltes zwischen einer Leit- und einer Laufschaufel oder umgekehrt zwischen einer Laufschaufel und einer Leitschaufel einer thermischen Strömungsmaschine. Da die Druckdifferenz in diesem axialen Spalt gering ist, lassen sich die Borsten des bürstenartigen Dichtelementes in axialer Bauart sehr biegeweich gestalten. Insbesondere ist die Druckdifferenz in dem axialen Spalt deutlich geringer als in einem radialen Spalt zwischen Laufschaufel und Gehäuse sowie zwischen Leitschaufel und Welle. Hierdurch wird der Spalt fast vollständig verschlossen, wodurch zwischen dem Dichtelement und einem aus den Leitschaufeln bzw. Laufschaufeln gebildeten Schaufelkranz ein extrem kleiner oder überhaupt gar kein durchströmbarer Querschnitt (Restspalt) eingestellt werden kann. Bei einer Verschiebung aufgrund thermischer Dehnungen der Welle während eines Betriebs der thermischen Strömungsmaschine gegenüber dem Gehäuse der Turbomaschine kann es zwar zu einer Spielüberbrückung kommen, so daß die Borsten unmittelbar an der rotierenden Komponente bzw. der feststehenden Komponente anliegen, aber lediglich eine elastische Verformung der Borsten auftritt. Hierdurch ist gewährleistet, daß weder die Borsten, d.h. das Dichtelement, noch die Schaufeln zu Schaden kommen. Zudem ist mit dem bürstenartig ausgebildeten Dichtelement eine günstige axiale Strömungsführung erzielbar, da der Neigungswinkel (Axialwinkel) der Borsten zur Rotationsachse vorab einstellbar ist. Die Dichtwirkung der Dichtungsanordnung bliebt daher während des Betriebes der thermischen Strömungsmaschine erhalten. Eine Leckströmung ist während des Betriebes stets klein, so daß der Wirkungsgrad der thermischen Strömungsmaschine durch eine solche Art der Abdichtung eines axialen Spaltes gesteigert werden kann.

Das Dichtelement ist vorzugsweise in der feststehenden Komponente angeordnet und kann hierbei in dieser auch verschieblich ausgestaltet sein. Beispielsweise können die Borsten zwischen zwei in axialer Richtung verschieblichen Klemmen eingespannt sein. Die axiale Bewegung des Dichtelementes kann durch Verwendung von Federn und Haltevorsprüngen oder ähnlichem auf ein bestimmtes Maß beschränkt sein. Es ist ebenfalls möglich, das Dichtelement mit der rotierenden Komponente zu verbinden.

Die auf eine Verwendung einer Dichtungsanordnung gerichtete Aufgabe wird durch die Verwendung einer Dichtungsanordnung zur Abdichtung eines axialen Spaltes in einer Dampfturbine gelöst, wobei der Spalt zwischen einer Laufschaufel und einer von dieser axial beabstandeten Leitschaufel gebildet ist, und sich ein bürstenartiges, Borsten aufweisendes Dichtelement den Spalt im wesentlichen überspannend von der Leitschaufel in Richtung der Laufschaufel erstreckt. Hiermit ist eine effektive Abdichtung des axialen Spaltes gegeben, bei der selbst bei einer Relativbewegung der Laufschaufel zur Leitschaufel in axialer Richtung eine Beschädigung der Laufschaufel bzw. Leitschaufel und des Dichtelementes weitgehend vermieden ist.

Die Dichtungsanordnung sowie die Verwendung einer Dichtungsanordnung werden beispielhaft anhand von Ausführungsbeispielen erläutert. Die in der Zeichnung dargestellten Ausführungsbeispiele sind zur Erläuterung im wesentlichen nicht maßstäblich und schematisiert dargestellt. Es zeigen:
- FIG 1: einen Längsschnitt durch eine thermische Strömungsmaschine mit einer Dichtungsanordnung,
- FIG 2: eine alternative Dichtungsanordnung ebenfalls in einem Längsschnitt durch eine thermische Strömungsmaschine, und
- FIG 3: einen Ausschnitt eines Querschnittes durch die Dichtungsanordnung gemäß Figur 1.

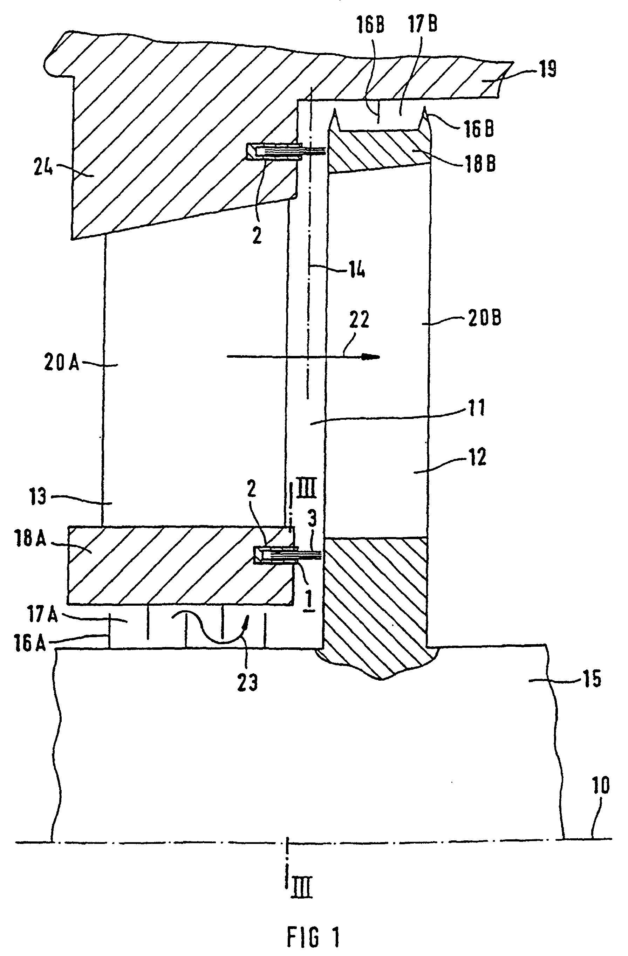

In Figur 1 ist ein Ausschnitt einer nicht näher dargestellten thermischen Strömgsmaschine beispielsweise einer Gasturbine oder einer Dampfturbine, in einem Längsschnitt dargestellt. Die thermische Strömungsmaschine weist eine Turbinenwelle 15 auf, die sich entlang einer Rotationsachse 16 erstreckt. Mit der Turbinenwelle 15 sind eine Mehrzahl von axial voneinander beabstandeten rotierbaren und auch in Umfangsrichtung nebeneinander angeordneten Komponenten 12 (Laufschaufeln 12) verbunden. In Umfangsrichtung nebeneinander angeordnete Laufschaufeln 12 bilden eine Laufschaufelreihe (Laufschaufelgitter, Laufschaufelkranz), wobei hier der Übersichtlichkeit halber nur eine dargestellt ist. Jede Laufschaufel 12 ist im wesentlichen senkrecht zur Turbinenwelle 15 gerichtet und weist einen der Turbinenwelle 15 abgewandtes Deckband 18B auf. Das Deckband 18B ist einem Gehäuse 19 der thermischen Strömungsmaschine benachbart und weist beispielhaft zwei zu dem Gehäuse 19 hin gerichtete Dichtspitzen 16B auf. Es können auch mehr oder wenig Dichtspitzen 16B vorgesehen sein. An dem Gehäuse 19 ist ebenfalls eine Dichtspitze 16B zu der Laufschaufel 12 gerichtet vorgesehen. Zwischen dem Deckband 18B und der Turbinenwelle 15 weist die Laufschaufel 12 einen Schaufelprofilbereich 20B auf. Zwischen zwei in Umfangsrichtung zueinander beabstandeten Laufschaufeln 12 wird durch die einander benachbarten Schaufelprofilbereiche 20B eine nicht näher dargestellte Durchströmungsöffnung für eine Strömung 22 eines Aktionsfluides gebildet, welches dem Antrieb der Laufschaufel 12 und damit der Rotation der Turbinenwelle 15 dient. Stromab der Laufschaufel 12 bezogen auf die Strömung 22 des Aktionsfluides ist eine feststehende Komponente 13, eine Leitschaufelanordnung mit einer Mehrzahl von Leitschaufeln 13, vorgesehen, die mit dem Gehäuse 19 verbunden ist. Die im Längsschnitt dargestellte Leitschaufel 13 weist ebenfalls ein Deckband 18A auf, welches der Turbinenwelle 15 benachbart ist. Zwischen dem Deckband 18A und dem Gehäuse 19 weist die Leitschaufel 13 ebenfalls einen Schaufelprofilbereich 20A auf, der der Umlenkung der Strömung 25 des Aktionsfluides dient. Zwischen dem Deckband 18A und der Turbinenwelle 15 ist ein Radialspalt 17A gebildet. Analog ist ein Radialspalt 17B zwischen dem Gehäuse 19 und dem Deckband 18B der Laufschaufel 12 gebildet. In den Radialspalt 17A ragen im wesentlichen senkrecht zur Rotationsachse 10 ausgedehnte Dichtspitzen 16A. Alternierend sind die Dichtspitzen 16A mit der Turbinenwelle 15 und dem Deckband 18A der Leitschaufel 13 verbunden.

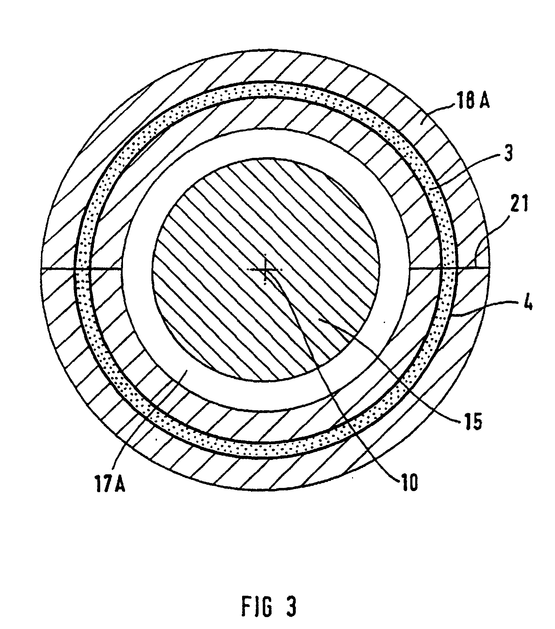

Während des Betriebes der nicht näher dargestellten thermischen Strömungsmaschine strömt durch die radialen Spalte 17A und 17B ein jeweiliger Leckstrom 23, welcher von der Strömung 22 des Aktionsfluides abgezweigt ist. Zwischen der Leitschaufel 13 und der Laufschaufel 12 ist zudem im Bereich der jeweiligen Deckbänder 18B und 18A ein axialer Spalt 11 durch die axiale Beabstandung der Laufschaufel 12 von der Leitschaufel 13 gebildet. Der axiale Spalt 11 ist im wesentlichen in einer Ausdehnungsrichtung 14 gerichtet, wobei die Ausdehnungsrichtung 14 senkrecht zur Rotationsachse 10 ist. In dem axialen Spalt 11 ist eine Dichtungsanordnung 1 vorgesehen, die ein Dichtelement 2 aufweist. Das Dichtelement 2 liegt auf einem die Turbinenwelle 15 umgebenden in der Leitschaufel 13 angeordneten, kreisringförmigen Dichtring 4 (siehe Figur 3). Es ist jeweils ein Dichtelement 2 in dem Deckband 18A der Leitschaufel 13 sowie in einem Fußbereich 24 der Leitschaufel 13, welcher dem Deckband 18B der Laufschaufel 12 gegenüberliegt , angeordnet. Jedes Dichtelement 2 weist eine Vielzahl von Borsten 3 auf. Die Borsten 3 erstrecken sich von der Leitschaufel 13 im wesentlichen parallel zur Rotationsachse 10 zur Laufschaufel 12 hin. Je nach Ausgestaltung des Dichtelementes 2 können die Borsten 3 bis an die Laufschaufel 12 ragen, diese berühren oder einen geringen Abstand von dieser aufweisen. Durch die Borsten 3 wird der Dichtring 4 gebildet, welcher den axialen Spalt 11 fast vollständig verschließt. Hierdurch ist eine besonders wirkungsvolle Abdichtung des axialen Spaltes 11 und damit auch einem diesem stromauf vorgeschalteten oder diesem stromab nachgeschalteten radialen Spalt 17A, 17B erzielt. Der Leckstrom 23 wird hierdurch deutlich reduziert, so daß die Strömung 22 des Aktionsfluides fast vollständig durch die Schaufelprofilbereiche 20A, 20B geführt wird.

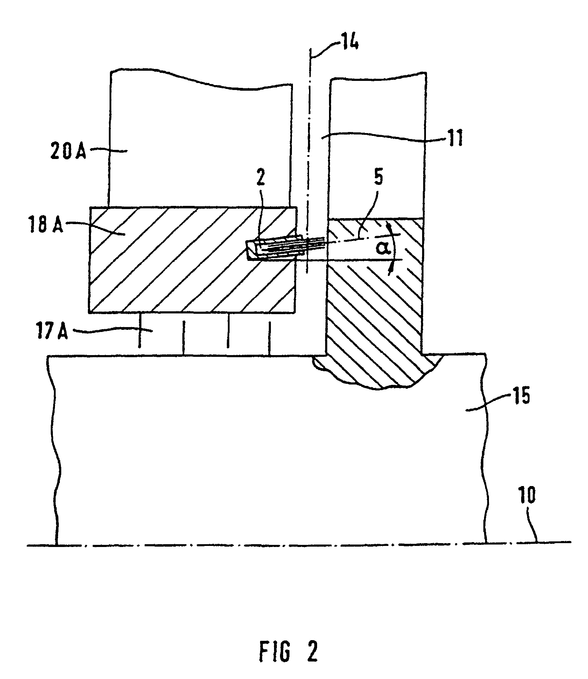

In Figur 2 ist ebenfalls in einem Längsschnitt eine nicht näher dargestellte thermische Strömungsmaschine in einem Ausschnitt gezeigt. Gleiche Bezugszeichen haben die gleiche Bedeutung wie in Figur 1. Das Dichtelement 2 ist im Unterschied zu dem in Figur 1 dargestellten Dichtelement 2 gegenüber der Rotationsachse 10 um einen Axialwinkel α von etwa 15° bis 20°, vorzugsweise etwa 8°, geneigt. Hierdurch ist bei einer Berührung der Borsten 3 des Dichtelementes 2 mit der Laufschaufel 12 eine Verbiegung der Borsten in eine gemeinsame Richtung und damit eine besonders effektive Abdichtung des Axialspaltes 11 erzielt.

In Figur 3 ist ein Querschnitt durch die Turbinenwelle 15 sowie durch das Deckband 18A der Leitschaufel 13 gemäß Figur 1 dargestellt. Das Deckband 18A ist durch eine Teilungsfuge 21 in zwei symmetrische Hälften geteilt, wobei jede Hälfte aus einer Vielzahl von Teildeckbändern der jeweils zugeordneten Leitschaufeln 13 (nicht dargestellt) gebildet ist. Es ist ebenfalls möglich, daß das Deckband 18A in eine Mehrzahl von Segmenten, z.B. acht 45°-Segmenten, geteilt ist. Die Borsten 3 sind in einem Dichtring 4 zusammengefaßt, welcher ebenfalls aus zwei symmetrischen Teilen besteht, welche an der Teilungsfuge 21 voneinander trennbar sind. Durch die geteilte Ausführung des Dichtelementes 2, des Dichtringes 4, kann dieser beispielsweise im Rahmen von Wartungsarbeiten oder Reparaturarbeiten an der Turbomaschine einfach kontrolliert bzw. ersetzt werden.

Die Erfindung zeichnet sich durch ein bürstenartiges Dichtelement aus, welches in einen axialen Spalt zwischen einer rotierenden Komponente und einer feststehenden Komponente, insbesondere einer thermischen Strömungsmaschine hineinragt und damit eine wirkungsvolle Abdichtung des axialen Spaltes gewährleistet. Hierdurch ist insbesondere bei einer Verwendung in einer Dampfturbine der Wirkungsgrad der Dampfturbine erhöht, da der Leckstrom von Dampf durch den axialen Spalt sowie einen diesem stromauf bzw. stromab zugeordneten und mit diesem strömungstechnisch verbundenen radialen Spalt deutlich verringert ist.

## Patentansprüche

1. Dichtungsanordnung (1) zur Abdichtung eines axialen Spaltes (11) in einer thermischen Strömungsmaschine, welcher Spalt (11) zwischen einer um die Rotationsachse (10) rotierbaren, eine Laufschaufel aufweisende Komponente (12) und einer gegenüber der Rotationsachse (10) feststehenden, eine Leitschaufel aufweisende Komponente (13) gebildet ist, wobei die rotierbare Komponente (12) mit einer Welle (15) der thermischen Strömungsmaschine verbunden ist, mit einem bürstenartigen, Borsten (3) aufweisenden Dichtelement (2), welches in den Spalt (11) hineinragt.

2. Dichtungsanordnung (1) nach Anspruch 1, bei der das Dichtelement (2) dicht gepackte Borsten (3) aufweist.

3. Dichtungsanordnung (1) nach Anspruch 1 oder 2, bei der das Dichtelement (2) um einen Axialwinkel, insbesondere kleiner 20°, vorzugsweise etwa 8°, gegenüber der Rotationsachse (10) geneigt ist.

4. Dichtungsanordnung (1) nach Anspruch 1 oder 2, bei der das Dichtelement (2) im wesentlichen parallel zur Rotationsachse (10) gerichtet ist.

5. Dichtungsanordnung (1) nach einem der vorhergehenden Ansprüche, bei der der axiale Spalt (11) entlang einer Ausdehnungsrichtung (14) gerichtet ist, wobei die Ausdehnungsrichtung (14) um etwa 90° gegenüber der Rotationsachse (10) geneigt ist.

6. Dichtungsanordnung (1) nach einem der vorhergehenden Ansprüche, wobei die Borsten (3) biegeweich und elastisch verbiegbar sind.

7. Dichtungsanordnung (1) nach einem der vorhergehenden Ansprüche, die zwei oder mehr Dichtelemente (2) aufweist, welche zusammen einen Dichtring (4) bilden.

8. Dichtungsanordnung (1) nach einem der vorhergehenden Ansprüche, in einer Dampfturbine, einer Gasturbine, einem Verdichter oder einem Turbogenerator.

9. Dichtungsanordnung (1) nach einem der vorhergehenden Ansprüche, bei der das Dichtelement (2) in der feststehenden Komponente (13) oder der rotierenden Komponente (12), insbesondere verschieblich, angeordnet ist.

10. Verwendung einer Dichtungsanordnung (1) zur Abdichtung eines axiales Spaltes (11) in einer Dampfturbine, welcher Spalt (11) zwischen einer Laufschaufel (12) und einer von dieser axial beabstandeten Leitschaufel (13) gebildet ist, wobei sich ein bürstenartiges, Borsten (3) aufweisendes Dichtelement (2) den Spalt (11) im wesentlichen überspannend von der Leitschaufel (13) in Richtung der Laufschaufel (12) erstreckt.

## Claims

1. Seal arrangement (1) for sealing an axial gap (11) in a thermal fluid-flow machine, which gap (11) is formed between a component (12) which is rotatable about the axis of rotation (10) and has a moving blade and a component (13) which is stationary relative to the axis of rotation (10) and has a guide blade, the rotatable component (12) being connected to a shaft (15) of the thermal fluid-flow machine, having a brush-like sealing element (2) which has bristles (3) and projects into the gap (11).

2. Seal arrangement (1) according to Claim 1, in which the sealing element (2) has tightly packed bristles (3).

3. Seal arrangement (1) according to Claim 1 or 2, in which the sealing element (2) is inclined by an axial angle, in particular less than 20°, preferably about 8°, relative to the axis of rotation (10).

4. Seal arrangement (1) according to Claim 1 or 2, in which the sealing element (2) is directed essentially parallel to the axis of rotation (10).

5. Seal arrangement (1) according to one of the preceding claims, in which the axial gap (11) is directed along an extension direction (14), the extension direction (14) being inclined by about 90° relative to the axis of rotation (10).

6. Seal arrangement (1) according to one of the preceding claims, the bristles (3) being flexible and elastically bendable.

7. Seal arrangement (1) according to one of the preceding claims, which has two or more sealing elements (2) which together form a sealing ring (4).

8. Seal arrangement (1) according to one of the preceding claims, in a steam turbine, a gas turbine, a compressor or a turbogenerator.

9. Seal arrangement (1) according to one of the preceding claims, in which the sealing element (2) is arranged in the stationary component (13) or the rotating component (12), in particular in a displaceable manner.

10. The use of a seal arrangement (1) for sealing an axial gap (11) in a steam turbine, which gap (11) is formed between a moving blade (12) and a guide blade (13) at an axial distance from the moving blade (12), a brush-like sealing element (2) which has bristles (3) extending from the guide blade (13) in the direction of the moving blade (12) in such a way as to essentially span the gap (11).

## Revendications

1. Dispositif (1) d'étanchéité pour rendre étanche un jeu (11) axial dans une turbomachine thermique, ce jeu (11) étant formé entre un élément (12) qui peut toumer par rapport à l'axe (10) de rotation et qui comporte une aube mobile et un élément (13) qui est fixe par rapport à l'axe (10) de rotation et qui comporte une aube directrice, l'élément (12) qui peut tourner étant relié à un arbre (15) de la turbomachine par un élément (2) d'étanchéité du type à brosse ayant des soies (3), qui fait saillie dans le jeu (11).

2. Dispositif (1) d'étanchéité suivant la revendication 1, dans lequel l'élément (2) d'étanchéité a des soies (3) drues.

3. Dispositif (1) d'étanchéité suivant la revendication 1 ou 2, dans lequel l'élément (2) d'étanchéité est incliné par rapport à l'axe (10) de rotation d'un angle axial, notamment inférieur à 20° et de préférence d'environ 8°.

4. Dispositif (1) d'étanchéité suivant la revendication 1 ou 2, dans lequel l'élément (2) d'étanchéité est dirigé sensiblement parallèlement à l'axe (10) de rotation.

5. Dispositif (1) d'étanchéité suivant l'une des revendications précédentes, dans lequel le jeu (11) axial s'étend le long d'une direction (14), la direction (14) étant inclinée d'environ 90° par rapport à l'axe (10) de rotation.

6. Dispositif (1) d'étanchéité suivant l'une des revendications précédentes, dans lequel les soies (3) peuvent être courbées élastiquement et en étant souples en flexion.

7. Dispositif (1) d'étanchéité suivant l'une des revendications précédentes, qui a deux éléments (2) d'étanchéité ou plusieurs éléments (2) d'étanchéité qui forment ensemble un anneau (4) d'étanchéité.

8. Dispositif (1) d'étanchéité suivant l'une des revendications précédentes dans une turbine à vapeur, une turbine à gaz, un compresseur ou un turbogénérateur.

9. Dispositif (1) d'étanchéité suivant l'une des revendications précédentes, dans lequel l'élément (2) d'étanchéité est monté notamment coulissant dans l'élément (13) fixe ou dans l'élément (12) tournant.

10. Utilisation d'un dispositif (1) d'étanchéité pour rendre étanche un jeu (11) axial dans une turbine à vapeur, le jeu (11) axial étant formé entre une aube (12) mobile et une aube (13) directrice à distance axialement de celle-ci, un élément (2) d'étanchéité du type à brosse ayant des soies (3) s'étendant en recouvrant sensiblement le jeu (11) de l'aube (13) directrice en direction de l'aube (12) mobile.
